# FASCICULE DE BREVET EUROPEEN

(11) **EP 3 303 059 B1**
(45) Date de publication et mention de la délivrance du brevet: **07.08.2019**
(21) Numéro de dépôt: 16731239.6
(22) Date de dépôt: 01.06.2016
(51) Int. Cl.: B60R 5/04

(54) **SYSTÈME DE MONTAGE RÉVERSIBLE D'UNE TABLETTE DE RECOUVREMENT D'UN COMPARTIMENT À BAGAGES SUR UN HAYON DE VÉHICULE AUTOMOBILE**
SYSTEM ZUM REVERSIBLEN ANBRINGEN EINER ABDECKPLATTE ZUR LADERAUMABDECKUNG AN DER HECKKLAPPE EINES KRAFTFAHRZEUGS
SYSTEM FOR REVERSIBLY MOUNTING A LUGGAGE COMPARTMENT COVER PANEL ON A MOTOR VEHICLE TAILGATE

(30) Priorité: 02.06.2015 FR 1555017
(43) Date de publication de la demande: 11.04.2018
(73) Titulaire: TREVES Products, Services & Innovation, 75008 Paris (FR)
(72) Inventeur: LECOMTE, Alicia, 51220 Villers-Franqueux (FR); AIRAULT, Jean-Yves, 56430 Concoret (FR)
(74) Mandataire: Sayettat, Julien Christian
(86) Numéro de dépôt international: PCT/FR2016/051308
(87) Numéro de publication internationale: WO 2016/193619

(56) Documents cités:
- EP-A1- 2 399 783
- DE-A1- 10 242 339
- DE-A1-102006 052 598
- DE-A1-102009 057 148

## Description

L'invention concerne un système de montage réversible d'une tablette de recouvrement d'un compartiment à bagages sur un hayon de véhicule automobile.

On connait divers système de montage réversible d'une tablette de recouvrement d'un compartiment à bagages sur un hayon de véhicule automobile, lesdits systèmes réalisant un montage fixe de ladite tablette par rapport audit hayon. Une telle tablette de recouvrement est connue du document JP58-45151U.

Avec un tel agencement, se présente un risque de détérioration du système dans les situations suivantes :
- chargement de la tablette avec un objet de masse excessive,
- fermeture du hayon alors que le compartiment à bagages est occupé par un objet volumineux venant heurter la tablette par le dessous.

Dans ces deux situations, on risque d'aboutir à une rupture d'un ou plusieurs composants du véhicule.

L'invention a pour but de pallier ces inconvénients.

A cet effet, l'invention propose un système de montage réversible d'une tablette de recouvrement d'un compartiment à bagages sur un hayon de véhicule automobile, ledit système réalisant un montage fixe de ladite tablette par rapport audit hayon, ledit système comprenant :
- une patte de fixation solidaire d'un bord arrière de ladite tablette, ladite patte comprenant un moyen d'emboitement supérieur et un moyen d'emboitement inférieur sur ledit hayon,
- un moyen d'emboitement réciproque supérieur et un moyen d'emboitement réciproque inférieur solidaires dudit hayon,
lesdits moyens et moyens réciproques étant respectivement agencés de manière à permettre un déboitement desdits moyens inférieurs - respectivement supérieurs - tout en laissant lesdits moyens supérieurs - respectivement inférieurs - emboités entre eux, de sorte que ladite tablette puisse effectuer une rotation dans un sens et dans l'autre selon un axe transversal passant par lesdits moyens supérieurs - respectivement inférieurs - tout en restant solidarisée audit hayon.

Dans cette description, les termes de positionnement dans l'espace (haut, bas, supérieur, inférieur, longitudinal, latéral, arrière, vertical, dessous,...) sont pris en référence au système monté dans le véhicule.

Avec l'agencement proposé, on résout les inconvénients de l'art antérieur :
- lors du chargement de la tablette avec un objet de masse excessive, on réalise un déboitement des moyens d'emboitement supérieurs tout en laissant les moyens inférieurs emboités entre eux, de sorte que la tablette puisse effectuer une rotation vers le bas tout en restant solidarisée au hayon,
- lors de la fermeture du hayon alors que le compartiment à bagages est occupé par un objet volumineux venant heurter la tablette par le dessous, on réalise un déboitement des moyens d'emboitement inférieurs tout en laissant les moyens supérieurs emboités entre eux, de sorte que la tablette puisse effectuer une rotation vers le haut tout en restant solidarisée au hayon.

Suite au déboitement, l'utilisateur peut aisément repositionner la tablette en position d'utilisation après avoir supprimé la cause dudit déboitement.

D'autres particularités et avantages de l'invention apparaîtront dans la description qui suit, faite en référence aux figures jointes, dans lesquelles :

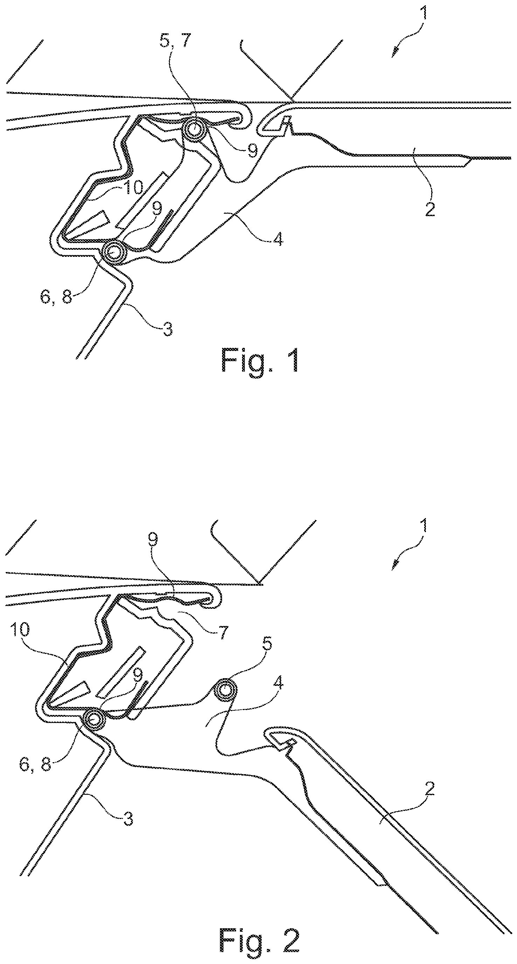

- la figure 1 est une vue schématique latérale d'un système selon une réalisation, la tablette étant en position de recouvrement des bagages,
- la figure 2 est analogue à la figure 1, la tablette étant partiellement déboitée du hayon et effectuant une rotation vers le bas, ceci correspondant à la situation d'un chargement de la tablette avec un objet de masse excessive,

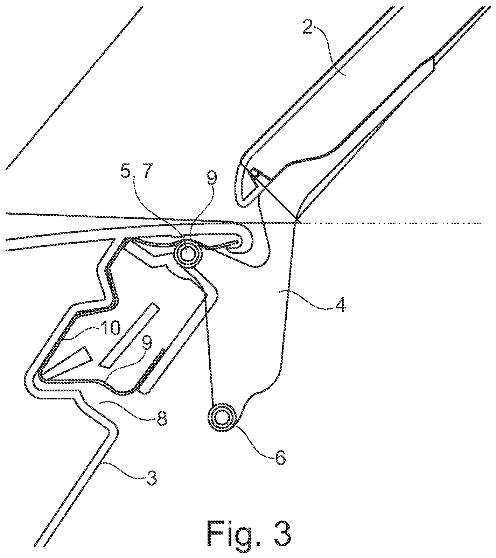

- la figure 3 est analogue à la figure 1, la tablette étant partiellement déboitée du hayon et effectuant une rotation vers le haut, ceci correspondant à la situation d'une fermeture du hayon alors que le compartiment à bagages est occupé par un objet volumineux venant heurter la tablette par le dessous.

En référence aux figures, on décrit un système 1 de montage réversible d'une tablette 2 de recouvrement d'un compartiment à bagages sur un hayon 3 de véhicule automobile, ledit système réalisant un montage fixe de ladite tablette par rapport audit hayon, ledit système comprenant :
- une patte 4 de fixation solidaire d'un bord arrière de ladite tablette, ladite patte comprenant un moyen d'emboitement supérieur 5 et un moyen d'emboitement inférieur 6 sur ledit hayon,
- un moyen d'emboitement réciproque supérieur 7 et un moyen d'emboitement réciproque inférieur 8 solidaires dudit hayon,
lesdits moyens et moyens réciproques étant respectivement agencés de manière à permettre un déboitement desdits moyens inférieurs - respectivement supérieurs - tout en laissant lesdits moyens supérieurs - respectivement inférieurs - emboités entre eux, de sorte que ladite tablette puisse effectuer une rotation dans un sens et dans l'autre selon un axe transversal passant par lesdits moyens supérieurs - respectivement inférieurs - tout en restant solidarisée audit hayon.

Selon la réalisation représentée, un moyen d'emboitement réciproque 7,8 - ou son moyen d'emboitement correspondant 5,6 en variante non représentée - comprend un ressort 9 agencé pour se rétracter lors de la manoeuvre d'emboitement, de manière à assurer un contact serrant entre lesdits moyens.

Selon la réalisation représentée, les moyens d'emboitement 5,6 sont sous forme de doigts transversaux, les moyens réciproques 7,8 étant sous forme de logements de réception desdits doigts, un ressort 9 étant disposé dans chacun desdits logements de manière à réaliser dans lesdits logements une paroi élastiquement rétractable permettant de réaliser un contact serrant entre lesdits logements et doigts correspondants.

Selon la réalisation représentée, les ressorts 9 sont formés par les parties extrêmes d'une lame ressort 10 unique repliée, lesdites parties formant les parois élastiquement rétractables.

De façon non représentée, le système 1 comprend deux pattes 4 pourvues de moyens d'emboitement supérieur 5 et inférieur 6 et deux jeux correspondants de moyens d'emboitement réciproques supérieur 7 et inférieur 8, lesdits pattes et jeux étant disposées symétriquement de part et d'autre d'un plan vertical longitudinal de symétrie dudit système.

## Revendications

1. Système (1) de montage réversible d'une tablette (2) de recouvrement d'un compartiment à bagages sur un hayon (3) de véhicule automobile, ledit système réalisant un montage fixe de ladite tablette par rapport audit hayon, ledit système comprenant :
• une patte (4) de fixation solidaire d'un bord arrière de ladite tablette, ladite patte comprenant un moyen d'emboitement supérieur (5) et un moyen d'emboitement inférieur (6) sur ledit hayon,
• un moyen d'emboitement réciproque supérieur (7) et un moyen d'emboitement réciproque inférieur (8) solidaires dudit hayon,
lesdits moyens et moyens réciproques étant respectivement agencés de manière à permettre un déboitement desdits moyens inférieurs, respectivement supérieurs, tout en laissant lesdits moyens supérieurs, respectivement inférieurs, emboités entre eux, de sorte que ladite tablette puisse effectuer une rotation dans un sens et dans l'autre selon un axe transversal passant par lesdits moyens supérieurs, respectivement inférieurs, tout en restant solidarisée audit hayon.

2. Système selon la revendication 1, **caractérisé en ce qu'**un moyen d'emboitement (5,6) ou son moyen réciproque (7,8) comprend un ressort (9) agencé pour se rétracter lors de la manoeuvre d'emboitement, de manière à assurer un contact serrant entre lesdits moyens.

3. Système selon la revendication 2, **caractérisé en ce que** les moyens d'emboitement (5,6) sont sous forme de doigts transversaux, les moyens réciproques (7,8) étant sous forme de logements de réception desdits doigts, un ressort (9) étant disposé dans chacun desdits logements de manière à réaliser dans lesdits logements une paroi élastiquement rétractable permettant de réaliser un contact serrant entre lesdits logements et doigts correspondants.

4. Système selon la revendication 3, **caractérisé en ce que** les ressorts (9) sont formés par les parties extrêmes d'une lame ressort (10) unique, lesdites parties formant les parois élastiquement rétractables.

5. Système selon l'une quelconque des revendications 1 à 4, **caractérisé en ce qu'**il comprend deux pattes (4) pourvues de moyens d'emboitement supérieur (5) et inférieur (6) et deux jeux correspondants de moyens d'emboitement réciproques supérieur (7) et inférieur (8), lesdits pattes et jeux étant disposées symétriquement de part et d'autre d'un plan vertical longitudinal de symétrie dudit système.

## Patentansprüche

1. System (1) zur umkehrbaren Montage einer Abdeckplatte (2) eines Kofferraums auf einer Kraftfahrzeugheckklappe (3), wobei das System eine stationäre Montage der Platte bezüglich der Heckklappe ausführt, wobei das System Folgendes umfasst:
- eine Befestigungspratze (4), die fest mit einem hinteren Rand der Platte verbunden ist, wobei die Pratze ein oberes Verschachtelungsmittel (5) und ein unteres Verschachtelungsmittel (6) auf der Heckklappe umfasst,
- ein oberes reziprokes Verschachtelungsmittel (7) und ein unteres reziprokes Verschachtelungsmittel (8), die fest mit der Heckplatte verbunden sind,
wobei die Mittel und reziproken Mittel jeweils derart eingerichtet sind, dass sie ein Ausklinken der unteren, - bzw. oberen - , Mittel erlauben, während sie gleichzeitig die oberen, - bzw. unteren - , Mittel miteinander verschachtelt lassen, so dass die Platte eine Drehung in eine Richtung und in die andere gemäß einer Querachse, die durch die oberen , - bzw. unteren - , Mittel durchgeht, ausführen kann, während sie gleichzeitig mit der Heckklappe fest verbunden bleibt.

2. System nach Anspruch 1, **dadurch gekennzeichnet, dass** ein Verschachtelungsmittel (5, 6) oder sein reziprokes Mittel (7, 8) eine Feder (9) umfasst, die eingerichtet ist, um sich bei dem Verschachtelungsmanöver zurückzuziehen, so dass ein klemmender Kontakt zwischen den Mitteln sichergestellt ist.

3. System nach Anspruch 2, **dadurch gekennzeichnet, dass** die Verschachtelungsmittel (5, 6) die Form von Querfingern aufweisen, wobei die reziproken Mittel (7, 8) die Form von Empfangsaufnahmen der Finger aufweisen, wobei eine Feder (9) in jeder der Aufnahmen derart angeordnet ist, dass in den Aufnahmen eine elastisch einziehbare Wand, die es erlaubt, einen klemmenden Kontakt zwischen den entsprechenden Aufnahmen und Fingern herzustellen, hergestellt wird.

4. System nach Anspruch 3, **dadurch gekennzeichnet, dass** die Federn (9) durch die Endteile eines einzigen Federblatts (10) gebildet sind, wobei die Teile die elastisch einziehbaren Wände bilden.

5. System nach einem der Ansprüche 1 bis 4, **dadurch gekennzeichnet, dass** es zwei Pratzen (4) umfasst, die mit oberen (5) und unteren (6) Verschachtelungsmitteln und zwei entsprechenden Sätzen oberer (7) und unterer (8) reziproker Verschachtelungsmittel versehen sind, wobei die Pratzen und Sätze symmetrisch auf der einen und anderen Seite einer vertikalen Symmetrielängsebene des Systems angeordnet sind.

## Claims

1. System (1) for reversibly mounting a shelf (2) covering a luggage compartment on a motor vehicle hatch (3), said system achieving a fixed mounting of said shelf with respect to said hatch, said system comprising:
- a fixation tab (4) securely fixed to a rear edge of said shelf, said tab comprising an upper interlocking means (5) and a lower interlocking means (6) on said hatch,
- an upper reciprocal interlocking means (7) and a lower reciprocal interlocking means (8) secured to said hatch,
said means and reciprocal means being respectively arranged so as to make it possible for a dislocation of said lower means, - respectively upper - , while leaving said upper means, - respectively lower - , interlocked together, such that said shelf can rotate in one direction and in the other, about a transversal axis passing through said upper means, - respectively lower - , while remaining secured to said hatch.

2. System according to claim 1, **characterised in that** an interlocking means (5, 6) or the reciprocal means (7, 8) thereof comprises a spring (9) arranged to be retracted during the interlocking motion, so as to ensure a clamping contact between said means.

3. System according to claim 2, **characterised in that** the interlocking means (5, 6) are in the form of transversal fingers, the reciprocal means (7, 8) being in the form of housings for receiving said fingers, a spring (9) being arranged in each of said housings, so as to produce, in said housings, an elastically retractable wall making it possible to produce a clamping contact between said housings and corresponding fingers.

4. System according to claim 3, **characterised in that** the springs (9) are formed by the extreme portions of one single spring blade (10), said portions forming the elastically retractable walls.

5. System according to any one of claims 1 to 4, **characterised in that** it comprises two tabs (4) provided with upper (5) and lower (6) interlocking means and two corresponding sets of upper (7) and lower (8) reciprocal interlocking means, said tabs and sets being arranged symmetrically on either side of a longitudinal, vertical plane of symmetry of said system.
